# EUROPEAN PATENT APPLICATION

(11) **EP 1 102 254 A1**
(43) Date of publication of application: **23.05.2001**
(21) Application number: 99926771.9
(22) Date of filing: 23.06.1999
(51) Int. Cl.: G11B 7/26, G11B 7/24

(54) **METHOD FOR PRODUCING MASTER DISK FOR PRODUCING FORMED SUBSTRATE WITH GROOVE, METHOD FOR PRODUCING STAMPER FOR PRODUCING FORMED SUBSTRATE WITH GROOVE, METHOD FOR PRODUCING FORMED SUBSTRATE WITH GROOVE, FORMED SUBSTRATE WITH GROOVE, STORAGE MEDIUM, STORAGE, AND COMPUTER**

(30) Priority: 01.06.1999 JP 15327899
(71) Applicant: Nikon Corporation, Tokyo 100-0005 (JP)
(72) Inventor: NISHIYAMA, Madoka, Yokohama-shi, Kanagawa 244-0002 (JP); MORITA, Seiji, Yokohama-shi, Kanagawa 244-0812 (JP)
(74) Representative: Viering, Jentschura & Partner
(86) International application number: PCT/JP99/03345
(87) International publication number: WO 00/74047

(57) **Abstract**

A substrate 3 on which a photoresist 2 is coated is exposed to an exposure light along a line through a lens 1. Then, the exposure position is moved from the initial position O₁ to the position O₂ apart from a distance corresponding to a summation of a groove width Gw and a land width Lw. The exposure is carried out along a line parallel to the initial exposure line, and with repeating this, exposed areas 2e having a width Lw and a separation Gw are formed on the resist 2. Then, the resist is developed, the exposed areas 2e are removed, resin or the like is pressed on it, and a replica is formed. From the replica, a stamper is, then, manufactured by using an electroforming method. Finally, a grooved molding substrate is manufactured from glass or resin by using the stamper. Although the land width Lw is defined by the effective spot diameter ⌀ of the optical system, the groove width Gw can be less than this value.

## Description

### BACKGROUND OF THE INVENTION

### 1. Field of the Invention

The present invention relates to a grooved molding substrate (a substrate formed by a stamper), which has narrow grooves (on which pits are formed) and is used for optical disks, magneto-optical disks, hard disks (magnetic disks), and the like, and a method for manufacturing thereof. Moreover, the present invention relates to a method for manufacturing a master substrate used for manufacturing the aforesaid grooved molding substrate and the stamper. Furthermore, the present invention relates to a recording medium using the grooved molding substrate, a memory device using the recording medium, and a computer using the memory device. Since the grooved molding substrate according to the present invention can be formed narrow grooves having their width of 0.23 µm or less, the recording density can be enhanced by applying to optical disks, magneto-optical disks, hard disks, and the like.

### 2. Description of Related Art

Data recording media such as optical disks, hard disks, and the like, are capable of recording large quantities of information. Such data recording media are commonly referred to as CD's (compact disks), LD's (laser disks), DVD's (digital video disks, digital versatile disks), etc. These data recording media may contain music, movies, software, etc. Such media are also used as storage devices in computers. Demand for such recording media is expanding greatly. Indeed, it is anticipated that optical disk and hard disk usage will continue to expand since these are the major recording media of the multimedia age.

Optical disks are classified according to the existence or absence of a recording layer and further classified according to the type of recording layer. Optical disk types include:
(1) the read-only type (CD, LD, CD-ROM, photo-CD, DVD-ROM, read-only type MD, etc.);
(2) the write-once type (CD-R, DVD-R, DVD-WO, etc.); and
(3) the rewritable type capable of erasure followed by writing any number of times (magneto-optical disk, phase-change type disk, MD, CD-E, DVD-RAM, DVD-RW, etc.).

Moreover, the high density HD-DVD has also been proposed as a medium of future.

The process for manufacturing these optical disks begins with the molding of raw material resin into a resin substrate. Raw material resin, for example, polycarbonate, acrylate resin, polystyrene, etc., is heated, melted or partially melted, and then pressed using a stamper, thereby molding (manufacturing) a resin substrate. Typically, the molding method used is a pressure molding or injection molding method. The stamper forms fine concavities and protuberances which represent the information to be copied upon the substrate surface. Other than resin molding, there is no such method for manufacturing large quantities of substrates that have minute concavities and protuberances in a short time period.

Types of pits and protuberances include:
(1) pits that indicate a unit of information; and
(2) guide grooves that are provided for tracking by the pickup head.

Generally, the manufacture of data recording media involves circular substrates provided with pits and grooves on the substrate surface in a pattern of concentric circular rings or as a spiral pattern. The region between grooves along the radial direction is called a "land." Recording upon the lands occurs during the land recording method, or alternatively, recording occurs within the groove per the groove recording method.

In order to improve the recording density, the land/groove recording method was developed to record upon both the grooves and lands. In this case, both grooves and lands are tracks, and the width of both grooves Gw and lands Lw are nearly equal. However, there are reasons for sometimes deliberately widening one or the other. Incident light enters the backside surface (flat smooth surface) of the substrate. The inner part becomes a land and this side becomes a groove as seen from the substrate front.

As the recording density has increased, to meet the increased need for storage capacity, the width of grooves, lands, and pits has decreased and their depth has increased, For example, the width has decreased from <1 µm to <0.3 µm and the depth has increased from >40 nm to >250 nm. As the width decreases and the depth increases (i.e., as density become higher), molding of the resin substrate becomes increasingly difficult, and the yield of good product declines.

When manufacturing a hard disk, a magnetic recording layer is typically formed or deposited on an aluminum or glass substrate with recording carried out by a magnetic head. A reflection layer, a recording layer and a protection layer may then be formed on the resin substrate to produce the desired final product.

As recording density increases, the recording layer becomes extremely flat and smooth. When the magnetic head becomes relatively still, the recording head and the recording layer adhere to one other and then fail to separate. In order to avoid this phenomenon, a garage region (CSS region = contact stop and start) is provided. The surface of this garage region is deliberately finished with a rough texture using a laser such that surface adherence is prevented. Head tracking also becomes difficult as recording density increases. Therefore, it is proposed that a magnetic hard disk, like an optical disk, should be provided with grooves. Due to the demand for such roughness and grooves, resin substrate are proposed as a means to increase manufacturing productivity. Increased productivity results due to the formation of roughness and grooves during the substrate molding. In this case, material of the substrate is resin or low-melting glass.

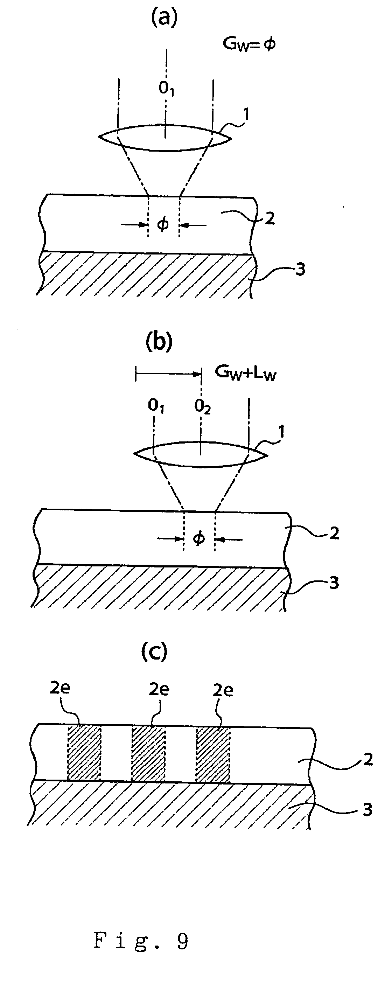

Previously, molding tools were manufactured by the process described in Hunyar, U.S. Patent No. 4,211,617, which corresponds to Japanese Patent publication Sho 59-16332, the disclosures of which are incorporated by reference herein in their entirety. This prior art (Hunyar) is going to be explained with reference to Figs. 9 through 11.

Generally, molding tools are manufactured using a glass substrate 3 that is polished with the precision of an optical surface. After the substrate 3 is cleaned, it is coated with a primer, for example, a silane-coupling agent. A photoresist 2 is then applied by spin coating and subjected to a pre-bake process. Positive-type, *i.e.*, wherein the region exposed to light is removed during development, photoresist 2 is often used. The reason is that the surface roughness can be made smaller by the positive-type photoresist, so that to obtain lower noise is advantageous. Accordingly, following explanations are to be assumed to use a positive-type photoresist.

Next, a laser beam recorder or a laser cutting machine is used to expose the photoresist 2 [*sic*] with a pattern of pits and/or grooves where the width of pits and grooves is generally determined by the laser spot diameter. In this case, in order to make the laser spot diameter as narrower as possible (to be higher density), the laser beam is converged to the diffraction limit by the lens 1. On the other hand, the depth of the pits and grooves is generally determined by the thickness of the photoresist 2.

The case where a plurality of grooves exit in a pattern of concentric circular rings is explained some more precisely. At first, the photoresist 2 is illuminated by a predetermined exposure light along the first line O₁ via the lens 1 (Fig. 9(a)). The illumination is continuous while forming grooves and is intermittent while forming pits. The illuminated area (exposed area) becomes the first groove of the molding substrate afterward. In this method, the spot diameter of the exposure light directly defines the line width of the 'exposed area' (hereinafter, the 'exposed area' may be abbreviated to the 'exposure area'). In this case, the minimum spot diameter is defined by the diffraction limit of the exposure light and it depends the wavelength λ of the exposure light. Actually, the light intensity distribution in the light beam shows the Gaussian distribution, so that the intensity is the strongest at the center and becomes weaker in the periphery. Therefore, the effective spot diameter (diameter of the removed area of the exposed photoresist by development) becomes smaller than the value defined by diffraction limit according to the sensitivity of the photoresist or the developing condition. When an exposure method called a 'narrow pencil writing' which uses only the center of the light beam by weakening the output of the light source is used, the effective diameter becomes further narrower. In the conventional method, on assuming the effective spot diameter to be ⌀, the value ⌀ has defined the groove width of the resist pattern and, accordingly, the groove width Gw of the molding substrate. In Fig. 9, ⌀ denotes the effective spot diameter.

At present, an argon laser light having the wavelength λ=351 nm is used for the exposure light. In this case, the minimum effective spot diameter ⌀ is 0.23 µm. Accordingly, the minimum groove width Gw of the molding substrate to be obtained is about 0.23 µm which is almost equal to ⌀ ($\text{⌀=groove width Gw}$).

When the groove width Gw is necessary to be large, it can be performed such that the spot diameter may not be narrowed up to diffraction limit or that the exposure light is used in the state of out of focus. When the predetermined line width cannot be obtained by one exposure, another exposure parallel to the first exposure can be performed repeatedly after moving the illuminating position by a necessary amount.

Then, the illuminating position is moved from the first line to the second line O₂ separated by the distance corresponding to the sum of the groove width Gw and the land width Lw (which is parallel to the first line) (Fig. 9(b)).

On moving the exposure light along the second line O₂, the photoresist is illuminated (exposed). Generally, this process is repeated a plurality of times regarding the second line O₂ as the first line O₁. Accordingly, a plurality of the exposure areas 2e of concentric circular rings are obtained (Fig. 9(c)).

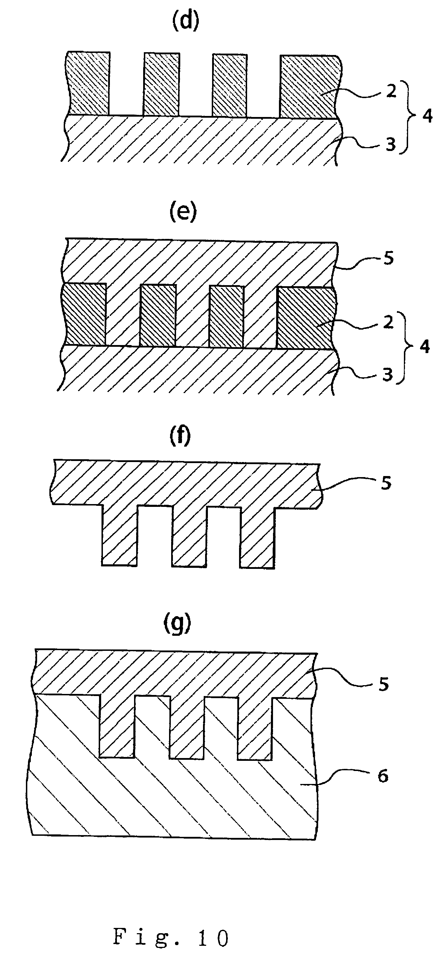

A resist pattern having grooves and pits on the substrate surface is obtained by developing the exposed photoresist. Following development, the resist pattern may optionally undergo a 20-60 minute post-bake at 80-120°C. When such a post-bake is used, the resist pattern is then cooled down to room temperature. This is shown in Fig. 10(d).

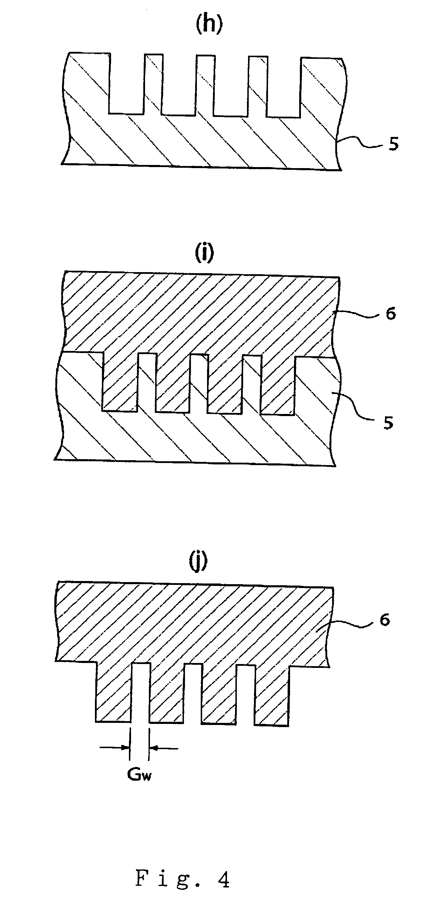

The resist pattern in combination with the substrate 3 shown in Fig. 10(d) is called the master substrate or master 4. The master substrate 4 is equivalent to the replica 46 in Fig. 4 of Hunyar U.S. Patent No. 4,211,617.

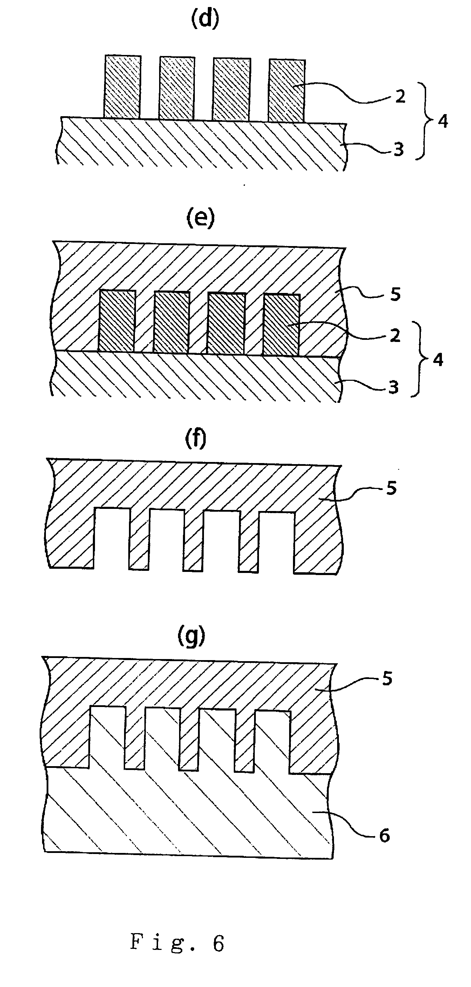

The master substrate 4 undergoes metallization treatment to form a conductive layer on the surface. Generally such treatment is carried out by sputtering (dry-type method), or by non-electrolytic plating (wet-type method). Following metallization, a thick plating layer, such as nickel (Ni), is formed upon the master substrate 4 by an electroforming method. The double layer structure that consists of a conductive layer and the Ni plating layer is referred to as the 'father stamper' or just the 'father' (in this specification and claims, referred as the 'stamper'). This is shown in Fig. 10(e). A free stamper 5 is obtained when the stamper 5 is peeled from the master substrate 4. This is indicated in Fig. 10(f). The stamper 5 is equivalent to mother member 52 in Fig. 6 of Hunyar U.S. Patent No. 4,211,617.

Care must be used during peeling since the stamper 5 is generally thin, approximately 200-300 µm in thickness. After peeling, the stamper 5 undergoes solvent treatment, such as acetone or the like, to remove resist since a portion of the resist may remain on the stamper 5. Resist must be removed since the concavities and protuberances on the surface of the stamper would otherwise be destroyed. Only a single stamper 5 is obtained from a single master substrate 4 since the resist pattern 2 is damaged during peeling. The obtained stamper 5 has an extremely precise pattern of concavities-protuberances. Actually, since the stamper 5 after peeling has a rather inaccurate dimension, a central hole is bored in the center of the stamper 5, and the unused portion of the outside perimeter is cut off. Before the processing the concavity-protuberance surface (signal surface) is shielded with a protective coat. Thus, an annular shaped stamper 5 is obtained.

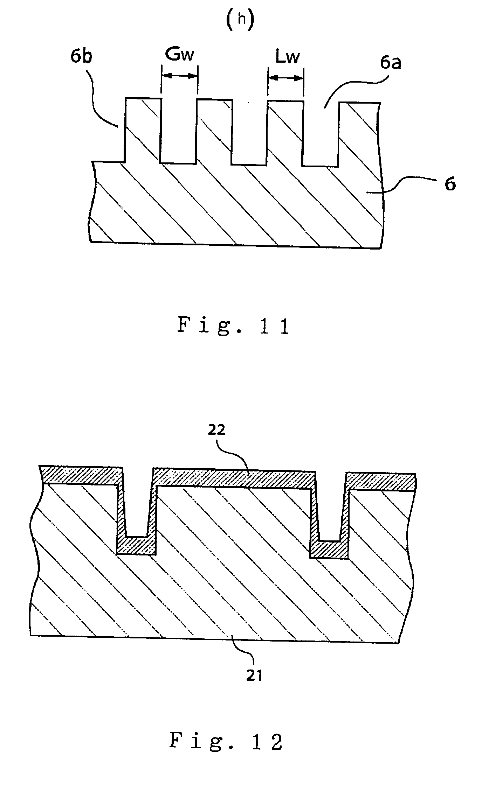

Then, the molding substrate is formed by using the stamper 5. Soft resin (or liquid resin) 6 is pressed against the stamper 5. This is shown in Fig. 10(g). Accordingly, the concavities-protuberances of the stamper 5 are embossed on the resin. After cooling down, the hardened or cured resin 6 is peeled away from the stamper 5 to form the molding substrate 6 shown in Fig. 11(h). The molding substrate 6 has the concavities-protuberances formed by grooves having the width Gw and lands having the width Lw lined in turn. In order to manufacture the molding substrate, a pressure molding or an injection molding can be used. Generally, the injection molding is used because of its high productivity.

As is apparent from explanations above, the width Gw of grooves, pits, or dints (in the specification and claims, these are represented by 'grooves') is corresponding to the wavelength λ and the effective spot diameter ⌀. Therefore, the molding substrate having the groove width Gw narrower than ⌀ cannot be obtained. Since argon laser (λ=351 nm) is used currently, the minimum groove width Gw to be formed is about 0.23 µm (230 nm). If the wavelength λ can be smaller, it may be possible to reduce the groove width Gw. However, the light source having shorter wavelength than argon laser cannot be available so far because there has been neither appropriate laser having shorter wavelength with continuous oscillation nor photoresist which has sensitivity to the short wavelength λ (ultraviolet light) and which makes it possible to etch groove walls vertically. Accordingly, the groove width Gw has had the shortest value of about 0.23 µm so far. However, the request for increasing recording density has become stronger, and the technique capable of forming a finer groove width Gw has been expected.

The present invention is made in view of the aforementioned problems, and has an object to provide a molding substrate having a groove width Gw finer than the finest groove width (=⌀) available at present, and a method to forming thereof. Another object of the present invention is to provide a method for manufacturing a master substrate and a stamper for fabricating the molding substrate with the aforementioned grooves. A further object of the present invention is to provide a memory medium using the molding substrate with the grooves, a memory device using the recording medium, and a computer using the memory device.

### SUMMARY OF THE INVENTION

As a result of diligent studies, the inventor found out the following facts, and made the invention:
(1) When the land on a molding substrate is to be formed by the exposed area of a resist, and the groove width is to be defined by the separation between the first line and the second line, the groove width can be less than the effective spot diameter ⌀;
(2) When a positive type photoresist is used, instead of manufacturing a stamper directly from a master substrate, after a replica is formed from the master substrate, a stamper is manufactured from the replica, so that a stamper having correct (that is, not reversed) concavities-protuberances is obtained.

An invention according to claim 1 is a method for manufacturing a master substrate for producing a grooved molding substrate comprising steps of a preparing step that prepares a substrate on which a photoresist is coated, an exposing step that exposes the photoresist to a light with a predetermined pattern such that the exposed part becomes a land of the grooved molding substrate, and an obtaining step that obtains the master substrate by developing the photoresist.

When the photoresist is positive type, a replica is formed by using the master substrate, and a stamper is manufactured by using the replica. When the photoresist is negative type, the stamper is manufactured directly from the master substrate. Then, a molding substrate is manufactured by using either one of these stampers. Therefore, in the master substrate according to the present invention, a photoresist area (exposed area) where a pattern is exposed becomes an area corresponding to the land (not groove) in the molding substrate which is final product, which is different from the prior art. Accordingly, what is defined by the wavelength of the exposure light is the land width Lw. The groove width Gw is defined by the separation between the adjacent exposed areas. In the present invention, the master substrate is manufactured by suitably arranging the separation between the adjacent exposed areas. By using the master substrate, a narrow-grooved molding substrate that has been impossible can be manufactured. (In the present invention, the remaining photoresist after development forms the protuberant portion, and the area where the removed photoresist was forms the concave portion in the master substrate. When the photoresist is removed all the way in the thickness direction, the groove depth formed in the grooved molding substrate is correspondent to the thickness of the photoresist.)

An invention according to claim 2 is a method for manufacturing a master substrate for producing a grooved molding substrate comprising steps of a preparing step that prepares a substrate on which a photoresist is coated, an exposing step that exposes the photoresist to a light with a predetermined pattern such that the exposed part becomes a land of the grooved molding substrate, an acquiring step that acquires a resist pattern by developing the photoresist, an etching step that etches a part of the substrate not covered by the photoresist, and an obtaining step that obtains the master substrate by removing the photoresist.

This invention also has the same effect as the invention according to claim 1. In addition to this, a master substrate that can be used repeatedly is obtained by suitably choosing the material of the substrate. Moreover, since the groove depth can be controlled by the etching depth, a deep groove that has been impossible to manufacture can be manufactured, and a groove having a steep sidewall and a smooth bottom surface can be also manufactured.

An invention according to claim 3 is a method for manufacturing a master substrate for producing a grooved molding substrate comprising steps of a first step that prepares a substrate on which a photoresist is coated, a second step that forms a part corresponding to a first land of the grooved molding substrate by illuminating and exposing the photoresist along a first line with a predetermined exposing light, a third step that moves the illuminating position from the first line to a second line apart from a distance Corresponding to a summation of a groove width Gw and a land width Lw of the grooved molding substrate, a fourth step that forms a part corresponding to a second land of the grooved molding substrate by illuminating and exposing the photoresist along the second line with the exposing light, and a fifth step that obtains the master substrate by developing the photoresist, or instead of the second through fourth steps, a step that forms a part corresponding to a spiral shaped land of a grooved molding substrate by illuminating and exposing along a spiral line having an interval corresponding to a distance corresponding to a summation of a groove width Gw and a land width Lw of the grooved molding substrate.

By using the master substrate manufactured by using the invention according to claim 3, a narrow-grooved molding substrate that has been impossible can be manufactured because of the same reason as described in the invention according to claim 1. (In the present invention, the remaining photoresist after development forms the protuberant portion, and the area where the removed photoresist was forms the concave portion in the master substrate. When the photoresist 3 is removed all the way in the thickness direction, the groove depth formed in the grooved molding substrate is correspondent to the thickness of the photoresist.)

Among the present invention, an invention that has the second through fourth steps is used for manufacturing a grooved molding substrate having a pattern of concentric circular rings. On the other hand, an invention having, instead of the second through fourth steps, a step that forms part corresponding to a spiral shaped land of a grooved molding substrate by illuminating and exposing along a spiral line having an interval corresponding to a distance corresponding to a summation of a groove width Gw and a land width Lw of the grooved molding substrate is used for manufacturing a grooved molding substrate having a spiral pattern. It is needless to say that either invention has the first and fifth steps.

In the present invention, the exposure separation is apart from a distance corresponding to a summation of a groove width Gw and a land width Lw of the grooved molding substrate. Among them, the land width Lw is defined by the exposure condition. Accordingly, although the groove width becomes the exposure separation subtracted by this land width Lw, the groove width Gw, which is a target, is obtained because the exposure separation is set as described above. Since the groove width Gw is not defined by the exposure condition, the groove width can be less than the effective spot diameter ⌀.

An invention according to claim 8 is a method for manufacturing a master substrate for producing a grooved molding substrate comprising steps of a first step that prepares a substrate on which a photoresist is coated, a second step that forms a part corresponding to a first land of the grooved molding substrate by illuminating and exposing the photoresist along a first line with a predetermined exposing light, a third step that moves the illuminating position from the first line to a second line apart from a distance corresponding to a summation of a groove width Gw and a land width Lw of the grooved molding substrate, a fourth step that forms a part corresponding to a second land of the grooved molding substrate by illuminating and exposing the photoresist along the second line with the exposing light, a fifth step that obtains a resist pattern by developing the photoresist, a fifth (a) step that etches a part of the substrate not covered by the photoresist, and a fifth (b) step that obtains the master substrate by removing the photoresist, or instead of the second through fourth steps, a step that forms a part corresponding to a spiral shaped land of a grooved molding substrate by illuminating and exposing along a spiral line having an interval corresponding to a distance corresponding to a summation of a groove width Gw and a land width Lw of the grooved molding substrate.

In the present invention, the difference from the invention according to claim 3 is that although the invention according to claim 3 uses concavity-protuberance of the developed resist pattern as that of the master substrate, the present invention uses the etched portion as the concave portion, and the remaining portion as the protuberant portion, which is the same invention as claim 2. The groove depth of the grooved molding substrate formed by using the master substrate manufactured by the method according to the present invention becomes the etching depth. This invention also has the same effect as the invention according to claim 3. In addition to this, the groove depth can be controlled by the etching depth, and a groove having a steep sidewall and a smooth bottom surface can be also manufactured. Accordingly, when the substrate is used for a medium, a grooved molding substrate having low noise can be obtained. Moreover, this master substrate can be used repeatedly.

Inventions according to claims 4 and 9 are the inventions according to claims 3 and 8, respectively, wherein after finishing the fourth step and before starting the fifth step, a combination of the third and fourth steps is carried out a plurality of times by regarding the second line in the fourth step as the first line in the third step.

Repeating the combination of the third [*sic*] and fourth steps a plurality of times, a master substrate for manufacturing a grooved molding substrate having a plurality of grooves, for example, concentric circular rings or parallel stripes can be manufactured.

Inventions according to claims 5 and 10 are the inventions according to claims 3 and 8, respectively, wherein the groove width Gw is 0.1 µm or less.

Making the groove width Gw 0.1 µm or less, when the substrate is used for optical disks, magneto-optical disks, hard disks, and the like, the recording density can be greatly increased relative to the conventional grooved molding substrate.

Inventions according to claims 6 and 11 are the inventions according to claims 3 and 8, respectively, wherein the groove width Gw is 0.06 µm or less.

Making the groove width Gw 0.06 µm or less, when the substrate is used for optical disks, magneto-optical disks, hard disks, and the like, the recording density can be further greatly increased relative to the conventional grooved molding substrate.

Inventions according to claims 7 and 12 are the inventions according to claims 3 and 8, respectively, wherein the groove of the grooved molding substrate is a hollow, a pit, or discontinuous.

In these inventions, since the groove of the grooved molding substrate is a hollow, a pit or discontinuous, in a grooved molding substrate formed by using the master substrate manufactured in accordance with the present invention, the groove becomes a hollow, a pit, or discontinuous. Accordingly, the arrangement of those can be used as binary information.

An invention according to claim 13 is a method for manufacturing a stamper comprising steps of a sixth step that, after obtaining the master substrate manufactured by the method for manufacturing a master substrate for producing a grooved molding substrate according to any one of claim 1 through 12 by using a positive type photoresist as a photoresist, manufactures a replica from the master substrate, and a seventh step that manufactures the stamper from the replica by using an electroforming method.

In any one of claim 1 through 12, when a positive type photoresist is used, the exposed area becomes a concave portion of the resist pattern. Therefore, when a stamper is directly manufactured from the master substrate by using electroforming method, the exposed area becomes the groove of the grooved molding substrate, which is just the same as the prior art. Accordingly, in order to reverse concavities-protuberances, a replica is formed from the master substrate, and a stamper is manufactured from the replica by using electroforming method. Using the electroforming method, an accurate stamper having a fine surface roughness can be easily manufactured.

An invention according to claim 14 is the invention according to claim 13, wherein the replica is made from metal or resin.

When metal is used for the replica, the replica is manufactured from the master substrate by using electroforming method. When resin is used for the replica, the replica is manufactured by curing after ductile resin is pressed against the master substrate, and is duplicated. In either case, an accurate replica having a fine surface roughness can be manufactured. However, it is more preferable to use resin because the replica can be obtained more easily and, moreover, when concavities-protuberances is formed on the master substrate by etching such as the invention according to claim 2 or 8, the master substrate can be used repeatedly.

An invention according to claim 15 is a method for manufacturing a stamper for producing a grooved molding substrate comprising a sixth step that, after obtaining the master substrate manufactured by a method for manufacturing a master substrate for producing a grooved molding substrate according to any one of claim 1 through 12 by using a negative type photoresist as a photoresist, manufactures the stamper from the master substrate by using an electroforming method.

In any one of claim 1 through 12, when a positive type photoresist is used, the exposed area becomes a concave portion of the resist pattern. Therefore, when a stamper is directly manufactured from the master substrate by using electroforming method, the exposed area becomes the land of the grooved molding substrate. Accordingly, a stamper is directly manufactured from the master substrate by using electroforming method contrary to the invention according to claim 13. Using the electroforming method, an accurate stamper having a small surface roughness can be easily manufactured.

An invention according to claim 16 is a method for manufacturing a stamper comprising steps of a preparing step that prepares a substrate on which a photoresist is coated, an exposing step that exposes the photoresist to a light with a predetermined pattern, an acquiring step that acquires a resist pattern by developing the photoresist, an etching step that etches a part of the substrate not covered by the photoresist, an obtaining step that obtains a master substrate by removing the photoresist, a forming step that forms, a resin replica from the master substrate, and a manufacturing step that manufactures the stamper from the replica by using an electroforming method.

In this invention, since the master substrate is manufactured from the substrate, the material can be chosen from durable materials. Moreover, since the etching depth can be controlled, the groove depth of the grooved molding substrate can be controlled. Further, a grooved molding substrate having a small surface roughness can be manufactured. Furthermore, by manufacturing a stamper from a resin replica, the number of times for using the master substrate can be extended. Since the electroforming method is used for manufacturing the stamper from the replica, an accurate stamper having a small surface roughness can be easily manufactured. A resin replica can be used repeatedly, and can manufacture any number of stampers.

Inventions according to claims 17 and 18 are methods for manufacturing a grooved molding substrate comprising steps that, after obtaining stampers manufactured by the inventions according to claims 13 and 15, respectively, manufacture a grooved molding substrate by forming glass or resin with each stamper.

Using this invention, a grooved molding substrate whose groove is correspondent with an unexposed area of the master substrate. Accordingly, a grooved molding substrate whose groove width is narrower than the effective spot diameter ⌀ defined by the wavelength of the exposure light can be obtained.

An invention according to claim 19 is a grooved molding substrate manufactured by an injection molding method by using a stamper, wherein the groove width Gw is 0.1 µm or less.

Making the groove width 0.1 µm or less, when the substrate is used for optical disks, magneto-optical disks, hard disks, and the like, the recording density can be greatly increased relative to the conventional grooved molding substrate.

An invention according to claim 20 is the invention according to claim 19, wherein the groove width Gw is 0.06 µm or less.

Making the groove width 0.06 µm or less, when the substrate is used for optical disks, magneto-optical disks, hard disks, and the like, the recording density can be further greatly increased relative to the conventional grooved molding substrate.

An invention according to claim 21 is the invention according to claim 19, wherein the sloping angle of the sidewall of the groove is 85° or more.

In this invention, since the sloping angle of the sidewall of the groove is 85° or more, noise is reduced, optical cross-talk between adjacent tracks is lowered, and thermal cross-talk (cross erasure) is reduced. Moreover, the wobble signal is accurately reproduced, CNR improves, and dropout of the various read-write signals becomes extremely low.

An invention according to claim 22 is the invention according to claim 19, wherein the ratio of the groove depth d to the groove width Gw is 0.1 or more.

In this invention, the greater the S/N ratio becomes, the lower the optical cross-talk between adjacent tracks and the thermal cross-talk (cross-erase) become. Moreover, the wobble signal is accurately reproduced, CNR improves, and dropout of the various read-write signals becomes extremely low.

An invention according to claim 23 is the invention according to claim 19, wherein the groove is a pit or discontinuous.

In this invention, the arrangement of pits, or discontinuous grooves can be used as binary information.

Inventions according to claims 24, 25 and 26 are memory media whose substrates are manufactured by the method for manufacturing a grooved molding substrate according to claim 17 and 18, respectively, and a substrate according to claim 19.

In these inventions, the memory medium means a medium on which information can be recorded, such as optical disks, magneto-optical disks, hard disks, and the likes. Using these grooved molding substrates as a substrate of the memory medium, a hard disk having a high recording density and a high S/N ratio can be obtained. Accordingly, in these memory medium [*sic*], the land is generally used for recording and the groove is generally used for tracking, so that the groove may be narrow although the land need to have a certain width. In the molding substrate according to this invention, although the land width is limited by the minimum width defined by the exposure optical system, the groove width can be narrower than this, so that recording density can be higher for that.

Inventions according to claims 27, 28 and 29 are memory devices having the memory media according to claims 24, 25, and 26, respectively.

In these inventions, using these memory media, memory devices having a high recording density and a high S/N ratio can be obtained.

Inventions according to claims 30, 31 and 32 are computers having the memory devices according to claims 27, 28, and 29, respectively.

In these inventions, using these memory devices as a memory device [of the computer], a memory device having the same memory capacity can be small, or a memory device having the same dimension can be made to have more memory

### BRIEF DESCRIPTION OF THE DRAWINGS

Fig. 1 is a first figure showing a method for forming a grooved molding substrate according to a first embodiment of the present invention.
Fig. 2 is a second figure showing a method for forming a grooved molding substrate according to a first embodiment of the present invention.
Fig. 3 is a third figure showing a method for forming a grooved molding substrate according to a first embodiment of the present invention.
Fig. 4 is a fourth figure showing a method for forming a grooved molding substrate according to a first embodiment of the present invention.
Fig. 5 is a first figure showing a method for forming a grooved molding substrate according to a second embodiment of the present invention.
Fig. 6 is a second figure showing a method for forming a grooved molding substrate according to a second embodiment of the present invention.
Fig. 7 is a third figure showing a method for forming a grooved molding substrate according to a second [*sic*] embodiment of the present invention.
Fig. 8 is a diagram showing master substrates according to the embodiments of the present invention.
Fig. 9 is a first figure showing a method for forming a grooved molding substrate according to prior art.
Fig. 10 is a second figure showing a method for forming a grooved molding substrate according to prior art.
Fig. 11 is a third figure showing a method for forming a grooved molding substrate according to prior art.
Fig. 12 is a schematic showing a hard disk.
Fig. 13 is a block diagram of a hard disk driver.
Fig. 14 is a block diagram of a computer.

### DESCRIPTION OF THE PREFERRED EMBODIMENTS

Although the best mode and the preferred embodiments according to the present invention are precisely described below with reference to the accompanying drawings, it is needless to say that the contents of the embodiments do not limit the scope of the present invention.

In the following embodiments, two major classifications of photoresist type are made, positive type (preferable) and negative type, and two classifications of master substrates, master substrate I and master substrate II. As to grooves, grooves may be pits, hollows, or discontinuous dints.

According to the present invention, a molding substrate having the lowest groove width Gw of 0.02 µm, or 0.01 µm according to circumstances, can be manufactured. A special feature of the present invention is to make it possible to manufacture a groove having a width smaller than 0.23 µm which has been unable. In consideration of easiness of manufacturing and the special feature of the present invention, the groove width is preferably 0.01 µm to 0.23 µm, more preferably 0.02 µm to 0.1 µm, and furthermore preferably 0.03 µm to 0.08 µm.

According to the present invention, it is possible to manufacture the groove depth of 1 nm to 1 µm.

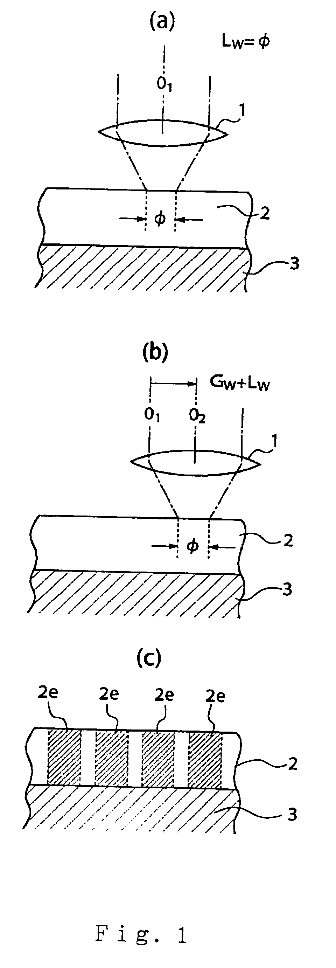

### 1. Manufacturing a Grooved molding substrate by Positive Type Photoresist (Fig.1 through Fig. 4)

### 〈Master Substrate I〉

First, the substrate 3 is prepared. Although the substrate 3 is usually disk shaped, it is possible for the substrate 3 to, be polygonal, not limited to the disk shape. Examples of the substrate 3 material mainly include glass materials. Suitable glass materials include soda lime glass (green plate glass), aluminosilicate glass (white plate glass), alkali-free glass, low-expansion glass, crystalline glass and ceramic materials. Quartz, for example, fused quartz or synthetic quartz, or even Si can be used as the ceramic material. Additionally, if desired, it is possible for the substrate 3 to use a metal substrate material, such as, Al, Fe, Cu, etc.

To prepare the master substrate, the substrate 3 surface is precisely polished in order to obtain a highly precision surface. It is also permissible to form a surface layer upon the substrate surface. Examples of suitable surface layer materials include:
(a) silicon oxide compounds, such as SiO₂;
(b) silicon-nitrogen compounds, such as Si₃N₄;
(c) metal silicide compounds, such as TiSi₂;
(d) metal, such as Ti, Al, Cu, Cr, Ta, Au, Ag, Pt, etc. and;
(e) metal oxides or metal nitrides, such as TiO₂, TiN, Al₂O₃, AlN, TaO₂, Ta₂O₅, Ta₃N₄, etc.
Furthermore, it is also possible to form the surface layer by oxidation or nitration of the substrate surface. In many cases, the surface layer is formed by thin layer deposition technology, for example, vacuum deposition or sputtering. It is also possible in such cases to form layers of two or more such materials. It is also possible to utilize precision polishing, such as chemical mechanical polishing, etc., to improve the smoothness and flatness of the surface layer.

Having polished the substrate 3 surface, the surface is coated with a photoresist 2. A photoresist may be applied by spin coating. Usually, a primer, such as a silane coupling agent coating, is applied to the substrate prior to photoresist coating. This primer improves adhesion of the photoresist 2 to the substrate 3. Yet, there are instances when a primer is not needed such as when Cr, TiN, etc. exist in the surface layer. In general, the photoresist depth determines the depth of pits and grooves. In the case of the master substrate II, the etching time determines the depth of grooves.

After having applied a photoresist 2 coating, a low temperature pre-bake may be carried out to adjust resist sensitivity. Subsequently, a laser beam recorder is used to illuminate the resist according to a prescribed pattern of pits, grooves, etc. The resist 2 is exposed in this manner.

Further explanation will be made in the case where a plurality of grooves are formed in a pattern of concentric circular rings. First, the photoresist 2 is illuminated by the predetermined exposure light along the circular first line (O₁) with the effective spot diameter ⌀ via the lens 1 (Fig. 1(a)). This corresponds to a second step. The illuminated area (exposed area) becomes a first land (groove in the prior art) of the molding substrate afterward. In Fig. 1(a), ⌀ denotes the aforementioned effective spot diameter and, in this case, becomes equal to the land width Lw.

Then, the illumination position is moved from the first line O₁ to the circular second line O₂ separated by the distance corresponding to the summation of the groove width Gw and the land width Lw of the grooved molding substrate (Fig. 1(b)). This corresponds to a third step.

On moving the exposure light along the second line O₂, the photoresist 2 is illuminated (a fourth step). Now, the exposure to a portion corresponding to a second land has completed.

Generally, after the fourth step and before the fifth step, the third step in combination with the fourth step is repeated a plurality of times regarding the second line in the fourth step as the first line in the third step. Accordingly, the photoresist 2 is exposed along a plurality of concentric circular rings. The state where the exposure has completed is shown in Fig. 1(c). The exposed area is denoted by 2e.

Although the repetition of the third and fourth steps is for forming lands and grooves in a pattern of concentric circular rings, when a spiral shape is to be formed, the illumination may be performed along a spiral shape to be aimed instead of the repetition of the third and fourth steps.

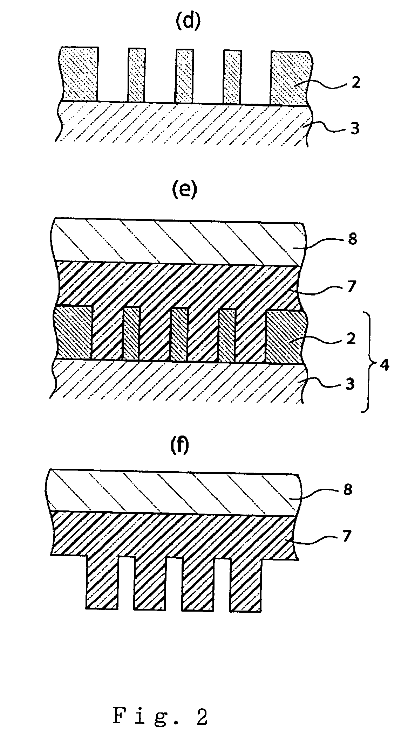

In the fifth step, the exposed resist 2 is immersed in developing solution, and the resist is developed. Examples of the developing solution include solutions of inorganic alkaline compounds such as sodium phosphate, calcium phosphate, sodium hydroxide, calcium hydroxide, etc. It is also possible to use an organic, rather than inorganic, alkaline solution. Since a positive type photoresist 2 is used, the exposed area 2e dissolves in the developing solution. Having dissolved the photoresist, resist is washed with ultrapure water and the underlying substrate 3 is exposed within the dissolved portions. A substrate 3 obtained in this manner that has a photoresist 2 patterned on its surface. This is shown in Fig. 2(d). This type of photoresist pattern 2, together with the substrate 3 or pattern alone, is referred to as the "resist pattern." Such a resist pattern is referred to as the master substrate I (4).

After development, it is possible to heat the master substrate I (4) to a somewhat high temperature during a post-bake. A post-bake is sometimes used to increase the sidewall angles of grooves and pits. Post-baking can also be used to improve resistance of the resist to etching, to improve adhesion between the resist 2 and the substrate 3 and also to harden the resist surface. By increasing the photoresist's hardness, the photoresist 2 is able to endure subsequent processes, including metallization and the formation of a plating layer upon the conductive layer by the electroforming method.

### 〈Master Substrate II〉

First, the master substrate I (4) is prepared. In the master substrate I (4), since the exposed portion of the resist 2 is dissolved and the substrate 3 is exposed within a portion of this resist, the exposed region is etched so as to provide a concave region upon the substrate 3 (the fifth (a) step). This concave pattern is identical to the resist 2 pattern. The depth of the concave region is defined by the etching time. The dry process is preferred for etching although it is possible to utilize the wet process. Among dry processes, the reactive ion etching (RIE) method is particularly advantageous. Other etching processes that can be used include etching utilizing magnetron RIE, electron cyclotron resonance (ECR), induction-coupled plasma (ICP), helicon waves, etc. It is possible to use the RIE method using a normal low plasma density process (less than 10¹⁰ ions/cm³). However, a high plasma density process (greater than 10¹¹ ions/cm³) is preferred in order to reduce etching region surface roughness and sidewall surface roughness. The latter includes RIE utilizing ICP or helicon waves that are advantageous for use with particularly fine patterns.

When dry etching is used, it is possible to form sharp sidewall angles within a front edge and a rear edge of a pit, with a preferred sidewall angle of 90° . This is carried out to reduce reproduction signal jitter of the optical disk. When a ceramic mold (master substrate II) is used, the pit and groove sidewall are not as rough as those of the resist pattern (master substrate I). If dry etching is used, the concavity bottom surfaces and the sidewall surfaces have extremely low surface roughness after etching. Various etching methods, not limited to dry processes, can form rather deep concavities with sharp sidewall angles. A deep concavity and a steep concavity sidewall angle can impart various types of benefits to an optical disk. These benefits include reduction of noise, lowering of optical crosstalk between adjacent tracks, and reduction of thermal crosstalk (cross erasure).

When a substrate 3 is used that has a surface layer, it is possible to just etch the surface layer. If the surface layer material and the underlying substrate material etch at different rates, etching a substrate 3 that has a surface layer is advantageous since it becomes possible to carry out etching uniformly. When etching such a substrate and surface layer, the surface layer thickness determines the depth of the grooves, etc.

Typically, the remnant resist is removed after the etching process (the fifth (b) step). Removal may be carried out by a dry etching process (ashing) using oxygen plasma. Alternatively, the remnant resist is removed by immersion in a heated container holding a concentrated acidic solution such as concentrated sulfic acid or concentrated nitric acid. Addition of hydrogen peroxide to such a solution improves resist removal. After resist is removed in this manner, the substrate surface is washed, for example, with ultrapure water.

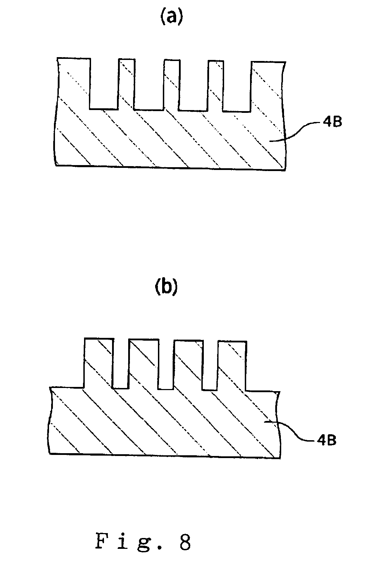

In this manner, a ceramic substrate is obtained that has protuberances corresponding to the pits and grooves shown in Fig. 8(a). The substrate becomes the master substrate II (4B) according to the present invention. Ceramic material is particularly preferred as a material of construction of this substrate. Ceramic material is preferred since the ceramic surface is quite smooth. In other words, ceramic material surface roughness (Ra) is extremely low (Ra ≦10 nm or Ra ≦1 nm according to circumstances). Optical disk noise is reduced when such a ceramic material is used for the manufacture of optical disks. Therefore the superiority of ceramic material is acknowledged by calling a master substrate II (4B) a "ceramic mold" in the specification.

### 〈Replica〉

A replica is modeled upon the master substrate and has concavities-protuberances reversed from the master substrate. The material of the replica may be metal or resin. A metallic replica is manufactured by electroforming on the master substrate. This method is the same method for manufacturing a stamper described later. However, resin is preferable for the material of a replica. Particularly resin is preferable when the master substrate I is used because a resin replica makes it possible to use the master substrate I repeatedly. Thus, a resin replica is explained below.

First, a master substrate 4 (master substrate I or II) is provided. Soft resin 7 is pressed against the concavity-protuberance surface (signal surface) of the master substrate 4. Then, the resin 7 is hardened or cured as shown in Fig. 2(e). The hardened or cured resin 7 is a copy of the concavities-protuberances of the master substrate. The resin 7 is then peeled away from the master substrate to form a replica.

It is preferred that the resin 7 provides superior duplication performance when pressed against the master substrate. Resins with low viscosity or high fluidity generally have good duplication performance. Typical method for lowering viscosity involve (a) heating and softening the resin. In this case, the resin 7 is subsequently cooled and hardened. Alternatively, (b) the resin 7 may be mixed with a solvent. In this case, the resin 7 hardens after the solvent is volatilized. A preferred method (c) employs a low viscosity material such as a low molecular weight resin, prepolymer, or resin raw material. Additionally, while not performed, such a material can be liquid. When the master substrate I is used for the resist pattern, it is preferable to use liquid type resin. It is also possible to mix a solvent with these materials to further lower viscosity. In this case, a solid high molecular weight resin is formed as polymerization (curing) of these materials occurs at the master substrate surface. The produced resin reproduces the concavities-protuberances of the master substrate.

Among these methods, the method (c) is the most preferable. The way to promote polymerization in the method (c) is heating or radiation exposure. Alternatively, two resin liquids may be mixed together, and the resin mixture is allowed to simply react and polymerize. Ion beam radiation, electron beam radiation, ultraviolet radiation, far ultraviolet radiation, laser light, x-rays, synchrotron radiation, etc., are examples of the types of radiation that may be used. Ultraviolet radiation, however, is preferred due to ease of handling.

An example of the preferred method is explained with reference to Figs. 2(e) and (f). The master substrate 4 is placed with the concavity-protuberance surface facing upward while a low-viscosity ultraviolet-curing resin liquid 7 is poured slowly from above. A transparent plate 8, such as a glass plate, may be placed upon the resin liquid so as to avoid the introduction of bubbles. Ultraviolet radiation may be applied through the transparent plate 8, thereby causing the resin to cure. The cured resin 7, together with the transparent plate 8, is peeled from the master substrate 4. A replica 7 is obtained in this manner that consists of two layers: cured resin 7 and transparent plate 8.

A suitable transparent plate 8 may be a glass plate of at least 0.6 mm thickness, preferably about 4 mm to about 10 mm thick. The glass plate should have a surface roughness that is low in comparison to the substrate 3 of the master substrate. A good surface roughness (Ra) value for the glass plate is 5 nm to 1 µm. It is also possible to use resin materials, such as, polycarbonate, polystyrene, polyolefins, acrylic resins, etc., rather than glass plate.

When a glass plate 8 is used, after first cleaning the plate, a primer, such as a silane coupling agent, may be used in order to improve adhesion between resin and the glass plate. It is preferred that the primer is heated (baked) after it is applied.

Examples of silane coupling agents which may be used as the primer include
vinyl silanes, acrylsilanes, epoxy silanes, aminosilanes, etc. Examples of vinyl silanes include, vinyltrichlorosilane, vinyltris(β-methoxyethoxy) silane, vinyltriethoxysilane, vinyltrimethoxysilane, etc.

Examples of acrylsilanes include γ-methacryloxypropyltrimethoxysilane, etc. Examples of epoxy silanes include β-(3,4-epoxycyclohexyl)ethyltrimethoxysilane, γ-glycidoxypropyltrimethoxysilane, γ-glycidoxypropylmethyldiethoxysilane, etc. Examples of aminosilanes includes N-β-(aminoethyl)-γ-aminopropyltrimethoxysilane, N-β-(aminoethyl)-γ-aminopropylmethyldimethoxysilane, γ-aminopropyltriethoxysilane, N-phenyl-γ-aminopropyltrimethoxysilane, etc. Additional examples of silane coupling agents include γ-mercaptopropyltrimethoxysilane, γ-chloropropyltrimethoxysilane, etc.

Examples of other primers include silanes, such as, chlorosilanes and alkoxysilanes, silazanes, or special silylating agents. It is also possible to mix two or more of these primers. The primer can be used as a dilute solution in a solvent such as toluene, xylene, ethanol, methanol, isopropanol, etc.

Examples of the resin of the replica are listed below. Generally, the resin can be classified as either (A) thermoplastic resins or (B) thermosetting resins.

### (A) Thermoplastic Resins

Examples of thermoplastic resins include polycarbonates, polystyrenes, styrene-type polymer alloys, polyolefins, polypropylenes, amorphous polyolefins, acrylate resins (such as polymethacrylates), polyvinylchlorides, thermoplastic polyurethanes, polyesters, nylons, etc.

### (B) Thermosetting Resins

Examples of thermosetting resins include, but are not limited to, thermosetting polyurethanes, epoxy resins, unsaturated acrylate resins, etc. A preferred example is a curing resin solution mainly composed of urethanated poly(meth)acrylate, polycarbonate di(meth)acrylate, and acetalglycoldiacrylate.

When a thermosetting resin is used, a low molecular weight resin liquid is made to contact the master substrate. This resin solution can contain a curing catalyst or a curing agent. The curing catalyst is a photosensitizer when curing takes place due to ultraviolet radiation exposure. Typical example of photosensitizers which may be used include acetophenones, benzoin alkyl ethers, propiophenones, ketones, anthraquinones, thioxanthones, etc. It is also possible to use various types of photosinsitizers mixed together. In particular, 1-hydroxycyclohexyl phenyl ketone, etc. Ketone-type photosensitizers are preferred due to their good duplication performance, mold releasability, and stability. Resins that cure upon exposure to ultraviolet light are called "ultraviolet curable resin" and are preferred for use as the resin of the stamper. Indeed, it is preferred that the resin does not adhere to the stamper, particularly during peeling away from the resin replica in a later process.

As to the resin solution, in consideration of absorption characteristics of heat and light, releasability of mold, light-resistance, durability, and hardness, it is preferable that the color number (APHA) is 30-50,and refractive index at 25°C is 1.4-1.8. It is preferable for duplicating performance that specific gravity and viscosity of resin solution at 25°C are 0.8-1.3 and 10-4800 CPS, respectively.

In order to counter static electricity during the last electroforming process or ion plating process, it is possible to mix an anti-static agent into the resin liquid. Alternatively, a thin anti-static layer (such as a Pt layer) is formed after the replica is completed. This type of anti-static treatment prevents problems such as burning, deformation, peeling, contaminant attachment, etc. The skin of the peeled resin replica from the master substrate 4 has generally small surface roughness Ra.

### 〈Stamper〉

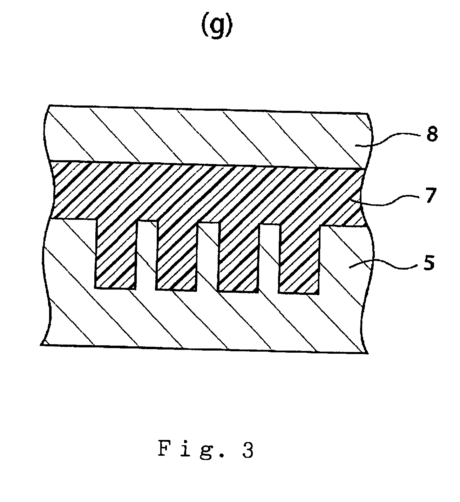

The stamper 5 is manufactured by plating the replica 7 using either a thick or a thin layer method as shown in Fig. 3. The plating layer becomes the stamper 4. There are dry and wet plating methods. Among wet plating methods, there are non-electrolytic plating and electrolytic plating. The dry method is called "vacuum layer deposition." Technologies for vacuum layer deposition include vacuum metallization, ion plating, sputtering, etc. Primary methods include dry plating and non-electrolytic plating. The second method is electrolytic plating. Plating may be carried out by a primary method or a secondary method.

The secondary methods (electrolytic plating) is also called "electroforming." Electrolytic plating can form a thick plating layer during a short time period. Prior to carrying out electroforming, since the replica [*sic*] is not electrically conductive, a thin, generally about 30-100 nm, metal layer is formed upon the replica [*sic*]. This metal layer is called "conductive layer" and this process is called "metallization."

Metallization is generally carried out by a primary method. Although Ni (nickel) is the preferred metal, other suitable metals which may be used include Au, Pt, Pd, Ag, Ti, Ta, Cr, etc. It is also possible to use other highly conductive metals or metal compounds. It is also possible to use a metal that contains phosphorous. Particularly when Ni is used as the metal, it is possible to first form a primer layer consisting of another metal or metal containing compound that has a thermal expansion coefficient nearly the same or equivalent to that of Ni itself. The conductive layer is formed upon this primer. During or after electroforming, this primer layer can decrease the strain resulting from electroforming layer stress. This strain phenomenon can sometimes destroy the pit and groove, etc., concavities. This primer layer may be removed after the stamper 5 is completed.

Then the resin replica with the conductive layer is immersed in a plating solution in order to carry out electroforming. Preferably, a nickel sulfamate solution is used as this plating solution. A Ni plating layer is formed upon the conductive layer as electroforming is carried out. This Ni plating layer is the stamper 5. It is also possible to use metals other than Ni. Alternatively, it is possible to mix other metals, i.e., Ti or elements, i.e., P with the Ni. Mixture with P can result in a mold with a great surface hardness. It is possible to obtain a hard stamper with a ling working life by the use of a Ni-P, Ti-P, or Ni-Ti-P, etc. alloy composition for the conductive layer, plating layer, or both the conductive layer and plating layer.

Moreover, it is possible, instead of a simple Ni plating layer, to add other plating layers, for example, metals such as silver, copper, or chrome, or alloys of such materials, to the Ni plating layer.

The stamper 5 can also be manufactured by dry plating or non-electrolytic plating without the use of electroforming. The dry method avoids the problem of waste water treatment. Among such dry methods, ion plating is capable of providing a stamper that has particularly low surface roughness.

Concavities-protuberances of the stamper disappear as the deposited plating layer thickness exceeds about 100 µm. That is to say, the plating layer surface appears flat. Generally, plating stops when the plating layer thickness reaches about 200 to about 600 µm thick, preferably, about 250 µm to about 300 µm. The stamper 5 is then completed.

Immediately after the stamper 5 is completed, the stamper 5 is still attached to the replica 7, so that the stamper is then peeled away from the replica 7. This peeling must be carried out carefully since the stamper 5 is a thin metal membrane (generally 250-300 µm thick). The peeled stamper 5 has a clean concavity-protuberance surface (shown in Fig. 4(h)). Although it does not basically need to be cleaned, the stamper 5 may be cleaned. Washing treatment typically involves either wet washing using organic solvent or purified water, or dry washing such as ashing, plasma treatment, ultraviolet exposure, ozone cleaning, etc.

By the way, the process for manufacturing the stamper 5 from the replica 7 is shown somewhat in Figs. 4-5 of Hunyar, U.S. Patent No. 4,211,617.

In order to improve the flatness of the stamper 5, prior to peeling off the stamper 5, or after peeling off the stamper, the back surface of the stamper may be mechanically polished. When polishing is carried out after peeling, the concavity-protuberance surface (information surface) of the stamper 5 is given a protective coating in order to protect the stamper's concavity-protuberance surface. This protective coating is formed by applying a peelable protective coating, followed by drying.

The stamper 5 is peeled from the replica 7, polished its back surface, and then a hole is mechanically drilled in the vicinity of the center. The outer perimeter of the stamper 5 is removed in a similar manner. This results in a finished annulus-shaped stamper. Shipment of the stamper is then possible.

Surface roughness Ra of the stamper is generally smaller than 10 nm. In most case, a stamper is having surface roughness smaller than 1 nm. When a master substrate II is produced using the RIE method, the resultant stamper has little surface roughness. Thus it is possible to manufacture a particularly high quality stamper.

### 〈Forming Grooved Molding Substrate〉

A grooved molding substrate is manufactured by using the method for forming a copy of the concavities-protuberances surface of the stamper (Fig. 4(i)). Thus a grooved molding substrate 6 having smaller groove width Gw than the effective spot diameter ⌀ is obtained. The formed grooved molding substrate 6 is shown in Fig. 4(j). As is apparent from the grooved molding substrate manufactured by prior art, groove width according to the present invention is narrower. Methods for manufacturing grooved molding substrate include injection, pressing, casting, etc. The injection molding method has the highest productivity among such molding methods.

The resin used for the grooved molding substrate is generally a thermoplastic resin, particularly a relatively hard resin. Examples of such resins include, polycarbonates, polystyrenes, styrene-type polymer alloys, acrylate resins (such as polymethacrylates), polyvinylchlorides, polyesters, nylons, ethylenevinylacetate resins, amorphous polyolefins, etc. However, as might be required, it is also possible to use a thermosetting resin. Examples of such thermosetting resins include epoxy resins, thermosetting polyurethanes, unsaturated acrylate resins, unsaturated polyesters, diethyleneglycol-bis-allylcarbonate resins, etc. Glass materials having a low melting point can be used instead of resins. However, the molding technology of the grooved molding substrate is just same as prior art, so that the explanation is left out.

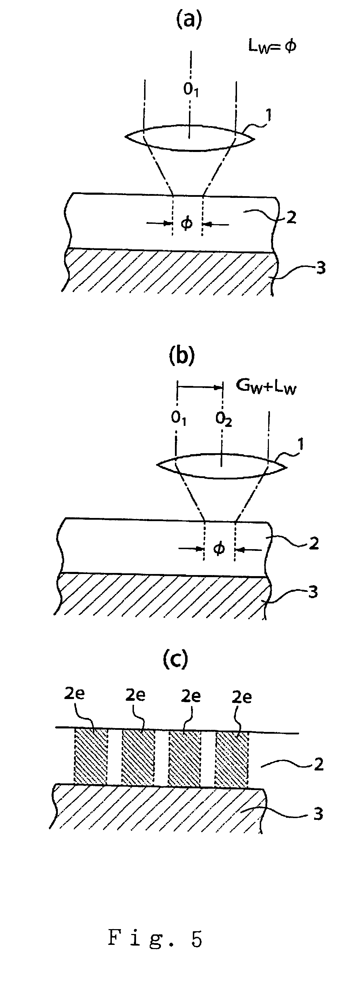

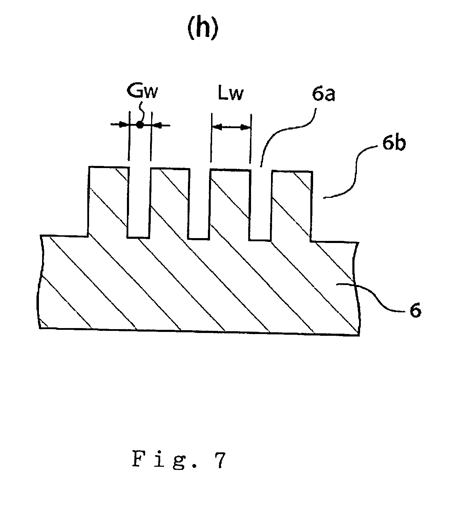

### 2. Manufacturing a Grooved Molding Substrate by Negative Type Photoresist (Fig.5 through Fig. 7)

### 〈Master Substrate I〉

First, the substrate 3 coated with the negative type photoresist 2 is prepared. Since the following explanation is basically same when the positive type photoresist is used as described above, the explanation is brief.

First, the photoresist 2 is illuminated by the exposure light along the first line O₁ (Fig. 5(a)). Accordingly, the portion corresponding to the first land is formed ($\text{the land width Lw = the effective spot diameter ⌀}$).

Then, the illumination position is moved from the first line O₁ to the circular second line O₂ separated by the distance corresponding to the summation of the groove width Gw and the land width Lw (Fig. 5(b)). This corresponds to a third step. On moving the exposure light along the second line O₂, the photoresist 2 is illuminated (a fourth step). Thus, the exposure to a portion corresponding to a second land ($\text{Lw = ∅}$) has formed.

Generally, after the fourth step and before the fifth step, the third step in combination with the fourth step is repeated a plurality of times regarding the second line in the fourth step as the first line in the third step. Accordingly, the photoresist 2 is exposed along a plurality of concentric circular rings. The state where the exposure has completed is shown in Fig. 5(c). The exposed area is denoted by 2e. The unexposed area corresponds to grooves.

Although the repetition of the third and fourth steps is for forming lands and grooves in a pattern of concentric circular rings, when a spiral shape is to be formed, the illumination may be performed along a spiral shape to be aimed instead of the repetition of the third and fourth steps.

Then, the exposed resist 2 is developed. Since a negative type photoresist 2 is used, the exposed area 2e remains, and the unexposed area dissolves in the developing solution. A photoresist pattern 2 shown in Fig. 6(d) is obtained and, thus, a master substrate I (4) consisting of the pattern 2 and the substrate 3 is obtained.

### 〈Master Substrate II〉

The master substrate I(4) shown in Fig. 6(d) is prepared. Then, the master substrate II (4B) shown in Fig. 8(b) is manufactured by etching, and then removing residual resist as described before when the master substrate II is manufactured by using a positive type photoresist.

### 〈Stamper〉

As shown in Fig. 6(e), the stamper 5 is manufactured by plating the master substrate 4 (although the master substrate II can be used, the master substrate I is used in the figure). The plating layer becomes the stamper 5. The further explanation is left out because it is just the same as when the positive type photoresist is used. A free stamper 5 as shown in Fig. 6(f) is obtained by peeling the stamper 5 from the master substrate 4.

Accordingly, when the negative type photoresist is used, there is a merit that the stamper can be obtained directly from the master substrate without using the replica.

### 〈Molding Substrate〉

A grooved molding substrate 6 having grooves 6a and lands 6b is formed from resin or glass materials by injection molding (resin) or pressing molding (glass) using aforementioned stamper 5. The explanation of the method is left out because it is just the same as when the positive type photoresist is used.

### 〈Hard Disk〉

Fig. 12 is a schematic showing a hard disk. A magnetic layer 22 [*sic*] is formed on the substrate 21 having lands and grooves. The molding substrate according to the present invention can be used for the substrate 21 of the hard disk. The material for the substrate is preferably resins or glasses, and particularly low-melting glass is preferable. The substrate 21 has a spiral shaped groove or fine grooves in a pattern of concentric circular rings. The magnetic layer 22 is made from CoCr, CoCrPt, CoCrTa, and/or the like deposited by sputtering. According to circumstances, a protective layer and an under layer are formed upon and under the magnetic layer, respectively.

In this hard disk, information is recorded on the lands, and grooves are used for tracking. Accordingly, the lands have to have a certain amount of width. The width has to be about the same or wider than that defined by the exposure optical system. On the other hand, grooves may be narrow. Therefore, the recording density can be increased by using the substrate according to the present invention for the substrate 21.

### 〈Hard Disk Drive〉

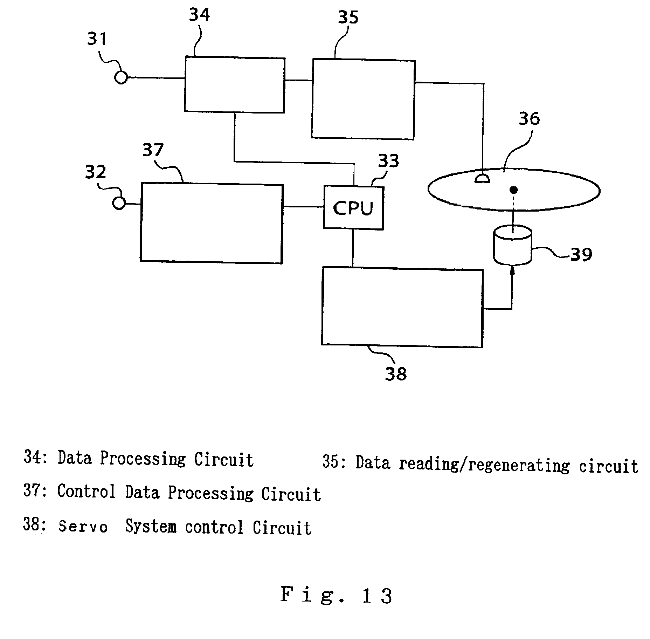

As generally shown in Fig. 13, a hard disk drive according to the present invention is composed of a data input terminal 31, a data processing circuit 34 for processing data passing through the terminal, a data recording/regenerating circuit 35 for converting the data processed the circuit 34 into recording data, transmitting to a head (without sign), and converting the data regenerated by the head into regenerating signal, a hard disk 36 on which the data is recorded data through the head, a motor 39 for driving the hard disk, a servo system control circuit 38 for controlling the motor, a control data input/output terminal 32, a control data processing circuit 37 for processing data input/output from the terminal 32, and a central processing circuit CPU 33 for controlling the circuit 34, 37, and 38, and for performing various calculation. Of cause, the data recorded on the hard disk 36 is regenerated through the head and transmitted to the data recording/regenerating circuit 35.

The hard disk that is one of a recording medium according to the present invention can be used for the hard disk drive. In this case, a hard disk drive having a high recording density can be obtained.

### 〈Computer〉

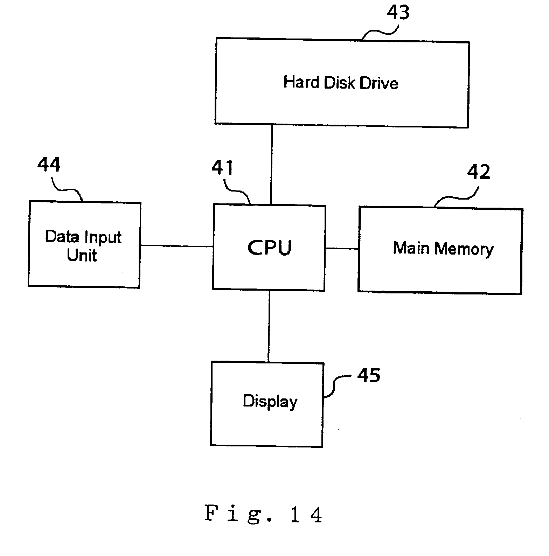

As generally shown in Fig. 14, a computer is composed of a central processing circuit CPU 43, a main memory 42 (semiconductor memories such as DRAM, SRAM, and pseudo SRAM) for connecting the CPU to an address space, a hard disk drive 43 for a secondary memory device, a data input unit 44 (such as keyboard, light pen, touch pad, digitizer, pen tablet, etc.), and a display 45 (such as CRT, liquid crystal display, etc.).

The hard disk drive according to the present invention can be used for the computer.

Embodiments according to the present invention will be described below.

### [First Embodiment]

A first embodiment is explained with reference to Figs. 1 through 4. The groove width Gw of the grooved molding substrate is 0.04 µm that is smaller than the minimum groove width (0.23 µm) formed by the exposure light. The land width Lw of the grooved molding substrate is made to be 0.36 µm.

### (1) Master Substrate II

First, a synthetic quartz plate was prepared as a substrate material. The substrate surface underwent precision polishing so as to have a surface roughness Ra less than 1 nm. After washing, first primer (hexamethyldisilane) and then photoresist was applied by spin costing the substrate surface. The substrate then underwent pre-bake, resulting in a roughly 0.2 µm thick photoresist layer 2 upon the substrate 3.

Then, a laser cutting machine was prepared. The laser light source was Ar laser. For the exposure light, the output light having a wavelength of λ=351 nm was used. In this case, the effective spot diameter ⌀ was made to be 0.36 µm by adjusting the output of the light source and the like. In the present invention, ⌀ defines the land width Lw of the grooved molding substrate.

The resist 2 was exposed by the exposure light in a spiral shape land pattern. That is, the exposure was carried out along the spiral that the distance between the adjacent lines was apart by the summation 0.40 µm of the groove width Gw=0.04 µm and the land width Lw=0.36 µm of the grooved molding substrate. When the exposed pattern was looked from radial direction, the exposed area 2e and the unexposed area were located in turn as shown in Fig. 1(c). The exposed area 2e corresponded to the land of the molding substrate, and the line width of the exposed area 2e corresponded to the land width Lw of the grooved molding substrate. The line width of the exposed area 2e was able to be 0.36 µm by using the spot (⌀=0.36 µm), and a land having the land width Lw=0.36 µm was able to be obtained. Accordingly, the width of the unexposed area became equal to the groove width Gw=0.04 µm.

After the completion of exposure of the resist upon the substrate, the substrate was developed using an inorganic alkaline developing solution. The resist surface was spin cleaned, followed by a post-bake, resulting in formation of resist pattern 2 shown in Fig. 2(d). This corresponded to the master substrate I (4).

The master substrate I (4) was, then, loaded into a reactive ion etching (RIE) apparatus, and dry etching was carried out. The etching was terminated when the depth reached to 80 nm.

Remnant resist was removed, and the substrate was cleaned, resulting in the master substrate II denoted by 4B in Fig. 8(a). The pattern was directly etched upon the quartz substrate of the master substrate II.

Since the master substrate II was manufactured using the RIE process, the groove sidewalls, the pit sidewalls, and the pit front and rear edges were all extremely sharp. This imparts the following (a)-(e[*sic*]) advantages to an optical disk:
(a) The wobble signal is accurately reproduced;
(b) CNR improves;
(e [*sic*]) Cross-erasure and crosstalk are reduced, dropout of the various read-write signals is extremely low and noise also is greatly reduced since the roughness of the pit bottoms, pit sidewalls, groove bottoms, and groove sidewalls is extremely low.

### (2) Resin Replica

An ultraviolet-curing resin Solution was provided. This resin solution was prepared by mixing together (1) 70 parts of acetal glycol diacrylate having the following 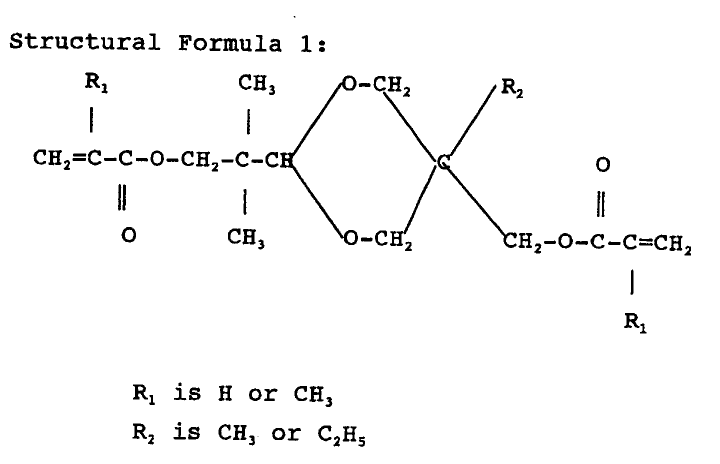 ; (2) 30 parts of urethane acrylate, which is a mixture of compounds having the following Structural Formula 2 and Structural Formula 3: 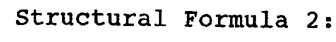 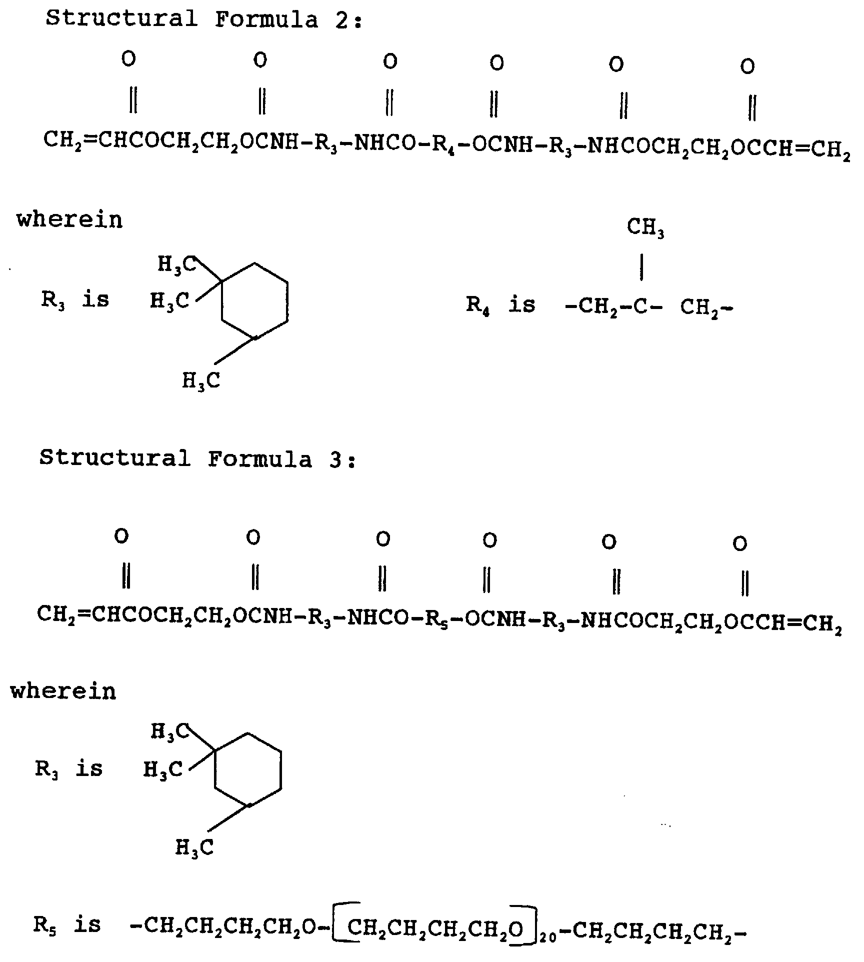 ; and (3) 3 parts of 1-hydroxycyclohexyl phenyl ketone (commercial product name=IRUGACURE 184, manufactured by Ciba-Geigy Corp.).

A green glass disk was prepared separately. This green glass disk had 200 mm outside diameter, 10 mm inside diameter, and 6 mm thickness. The disk was washed, and the surface was coated with silane coupling agent (primer) by the spin shower method. A 120 °C bake was carried out after coating.

The master substrate 4 was placed with the concavity-protuberance surface upward, and resin solution 7 was slowly poured upon the substrate 4 as shown in Fig. 2(e). The resin Solution 7 was poured carefully to avoid bubble entrapment. Then, the glass disk 8 was pressed against the master substrate 4 so that the viscous resin solution 7 was spread uniformly across the entire surface of the master substrate 4.

The resin solution 7 was exposed through the glass disk 8 to ultraviolet radiation from a mercury lamp for about 5-60 seconds. The resin solution 7 was cured by this means, resulting in the production of cured resin layer 7. The hardened resin layer 7 becomes the replica. The structure of the replica is shown in Fig. 2(e).

Next, the replica 7 was peeled away from the master substrate 4. This was carried out with considerable care so as to avoid damaging the replica and the master substrate. The surface roughness Ra of the replica was less than 1 nm.

### (3) Manufacturing a Stamper

The replica 7 was placed within a sputter apparatus, and a Ni layer (conductive layer) of roughly 40-70 nm thickness was deposited upon the surface. Conductive treatment was carried out by this. When the replica concavities-protuberances are deep, sputtering is preferably carried out in a RF discharge. An RF discharge is affected adversely (for example, causing sputtering rate inhomogeneity) by static electricity upon replica. Sputtering was carried out in an RF discharge (electric power=400 W).

When the Ni layer is thick, the Ni plating layer sometimes subsequently peels off. In such instances, the Ni layer (conductive layer) thickness is then reduced by 10-40 nm.

After the conductive treatment, the replica was next placed in a plating solution into which nickel sulfamate had been dissolved. The solution temperature was about 45-55 °C. Then electricity was turned on and Ni electroforming started. The current density was low at the beginning. Current density was then gradually increased. Electroforming was halted when the resultant Ni plating layer thickness reached 293 µm. The stamper 5 mainly consisted of this plating layer. This is indicated in Fig. 3(g).

As shown in Fig. 3(g), the stamper 5 was still attached to the replica 7 immediately after production of the stamper 5. After the stamper 5 was peeled from the replica 7, a free stamper 5 was obtained as indicated in Fig. 4(h). The stamper has reversed concavities-protuberances of the molding substrate that is the final product. The line width corresponding to the land width Lw of the grooved molding substrate was 0.36 µm and that corresponding to the groove width Gw was 0.04 µm. Surface roughness Ra of the stamper was less than 1 nm.

Spin coating was used to apply a protective coating (commercial product name is Clean Coat-S, manufactured by Fine Chemical Japan Inc.) upon the stamper's concavity-protuberance surface. After coating, the coating was allowed to dry naturally 10 hours, thereby shielding the concavity-protuberance surface with a protective coating. After polishing of the backside surface of the stamper 5, the inner diameter and outer perimeter were removed, thereby completing the manufacture of an annulus-shaped stamper 5.

The replica 7 was not damaged after the stamper 5 was peeled away. Accordingly, the replica could be reused.

### (4) Manufacturing a Grooved Molding Substrate

A Sumitomo Heavy Industries, Ltd. model SD40 injection molding machine was used for injection molding.

Polycarbonate (manufactured by Teijin Co., Ltd., product name: AD5503) was used as the resin of the molding substrate. This resin was loaded for feeding to the above-mentioned injection molding machine.

The previously manufactured stamper was set in the molding machine. Molding of the molding substrate 6 was carried out under the following conditions: 130 °C metal mold temperature, 340 °C resin temperature, 30 metric ton injection pressure, and 12 second cycle time. The substrate thickness was 0.6 mm. 600 grooved molding substrates 6 were molded (manufactured) during 2 hours.

The shape and dimension of the groove of the obtained grooved molding substrate was observed and measured using an electron microscope (HR-SEM) and an atomic force microscope (AFM). As a result of these observations, the groove depth, the land width, and the groove width were about 80 nm, 0.36 µm, and 0.04 µm, respectively. The slope of sidewall of grooves was steeper than 85° . A molding substrate having such specification has not been reported.

### [Second Embodiment]

Another stamper was manufactured by using the same method as the first embodiment. By using the stamper, a molding substrate with a plurality of grooves in striped shape (groove width Gw: 0.06 µm, land width Lw: 0.29 µm) was manufactured.

The shape and dimension of the groove of the obtained grooved molding substrate was observed using an electron microscope (HR-SEM) and an atomic force microscope (AFM). As a result of these observations, it was judged that the obtained values were almost same as the designed values.

### 〈Industrial Application〉

According to the present invention, the grooved molding substrate having the groove width (for example, less than 0.23 µm) less than the effective spot size ⌀, which cannot be obtained by prior art, can be manufactured in large quantities with low cost by using injection molding or the like. A molding substrate having sidewalls of groove steeper than 85° an be manufactured in large quantities with low cost by using injection molding or the like.

The molding substrate according to the present invention is particularly useful for a hard disk.

Although the present invention was explained in detail by the application of the molding substrate as an optical disk, it is also possible for the molding substrate to be used for other applications. According to the present invention, any kind of grooved molding substrate having minute concavities-protuberances can be molded. Such molding substrate can be used as substrates for applications such as magnetic disks (hard disks), optical cards, liquid crystal display devices, semiconductor devices, printer components, data write-rewrite devices, personal computer components, automotive components, etc. Such molding substrate can be used as optical components (such as zone plates, aspheric lenses, diffraction gratings, holograms, photomasks, or reticles) or encoder components. Preferably, the molding substrate is a data storage disk or an optical disk.

## Claims

1. A method for manufacturing a master substrate for producing a grooved molding substrate comprising steps of:
a preparing step that prepares a substrate on which a photoresist is coated;
an exposing step that exposes the photoresist to a light with a predetermined pattern such that the exposed part becomes a land of the grooved molding substrate; and
an obtaining step that obtains the master substrate by developing the photoresist.

2. A method for manufacturing a master substrate for producing a grooved molding substrate comprising steps of:
a preparing step that prepares a substrate on which a photoresist is coated;
an exposing step that exposes the photoresist to a light with a predetermined pattern such that the exposed part becomes a land of the grooved molding substrate;
an acquiring step that acquires a resist pattern by developing the photoresist;
an etching step that etches a part of the substrate not covered by the photoresist; and
an obtaining step that obtains the master substrate by removing the photoresist.

3. A method for manufacturing a master substrate for producing a grooved molding substrate comprising steps of:
a first step that prepares a substrate on which a photoresist is coated;
a second step that forms a part corresponding to a first land of the grooved molding substrate by illuminating and exposing the photoresist along a first line with a predetermined exposing light;
a third step that moves the illuminating position from the first line to a second line apart from a distance corresponding to a summation of a groove width Gw and a land width Lw of the grooved molding substrate;
a fourth step that forms a part corresponding to a second land of the grooved molding substrate by illuminating and exposing the photoresist along the second line with the exposing light; and
a fifth step that obtains the master substrate by developing the photoresist; or
instead of the second through fourth steps,
a step that forms a part corresponding to a spiral shaped land of the grooved molding substrate by illuminating and exposing along a spiral line having an interval corresponding to a distance corresponding to a summation of a groove width Gw and a land width Lw of the grooved molding substrate.

4. The method for manufacturing a master substrate for producing a grooved molding substrate according to claim 3, wherein after finishing the fourth step and before starting the fifth step, a combination of the third and fourth steps is carried out a plurality of times by regarding the second line in the fourth step as the first line in the third step.

5. The method for manufacturing a master substrate for producing a grooved molding substrate according to claim 3, wherein the groove width Gw is 0.1 µm or less.

6. The method for manufacturing a master substrate for producing a grooved molding substrate according to claim 3, wherein the groove width Gw is 0.06 µm or less.

7. The method for manufacturing a master substrate for producing a grooved molding substrate according to claim 3, wherein the groove of the grooved molding substrate is a pit, a hollow, or discontinuous.

8. A method for manufacturing a master substrate for producing a grooved molding substrate comprising steps of:
a first step that prepares a substrate on which a photoresist is coated;
a second step that forms a part corresponding to a first land of the grooved molding substrate by illuminating and exposing the photoresist along a first line with a predetermined exposing light;
a third step that moves the illuminating position from the first line to a second line apart from a distance corresponding to a summation of a groove width Gw and a land width Lw of the grooved molding substrate;
a fourth step that forms a part corresponding to a second land of the grooved molding substrate by illuminating and exposing the photoresist along the second line with the exposing light;
a fifth step that obtains a resist pattern by developing the photoresist;
a fifth (a) step that etches a part of the substrate not covered by the photoresist; and
a fifth (b) step that obtains the master substrate by removing the photoresist; or
instead of the second through fourth steps,
a step that forms a part corresponding to a spiral shaped land of the grooved molding substrate by illuminating and exposing along a spiral line having an interval corresponding to a distance corresponding to a summation of a groove width Gw and a land width Lw of the grooved molding substrate.

9. The method for manufacturing a master substrate for producing a grooved molding substrate according to claim 8, wherein after finishing the fourth step and before starting the fifth step, a combination of the third and fourth steps is carried out a plurality of times by regarding the second line in the fourth step as the first line in the third step.

10. The method for manufacturing a master substrate for producing a grooved molding substrate according to claim 8, wherein the groove width Gw is 0.1 µm or less.

11. The method for manufacturing a master substrate for producing a grooved molding substrate according to claim 8, wherein the groove width Gw is 0.06 µm or less.

12. The method for manufacturing a master substrate for producing a grooved molding substrate according to claim 8, wherein the groove of the grooved molding substrate is a pit, a hollow, or discontinuous.

13. A method for manufacturing a stamper for producing a grooved molding substrate comprising steps of:
a sixth step that, after obtaining the master substrate manufactured by the method for manufacturing a master substrate for producing a grooved molding substrate according to any one of claim 1 through 12 by using a positive type photoresist as a photoresist, manufactures a replica from the master substrate; and
a seventh step that manufactures the stamper from the replica by using an electroforming method.

14. The method for manufacturing a stamper for producing a grooved molding substrate according to claim 13, wherein the replica is made from metal or resin.

15. A method for manufacturing a stamper for producing a grooved molding substrate comprising a sixth step that, after obtaining the master substrate manufactured by a method for manufacturing a master substrate for producing a grooved molding substrate according to any one of claim 1 through 12 by using a negative type photoresist as a photoresist, manufactures the stamper from the master substrate by using an electroforming method.

16. A method for manufacturing a stamper comprising steps of:
a preparing step that prepares a substrate on which a photoresist is coated;
an exposing step that exposes the photoresist to a light with a predetermined pattern;
an acquiring step that acquires a resist pattern by developing the photoresist;
an etching step that etches a part of the substrate not covered by the photoresist;
an obtaining step that obtains a master substrate by removing the photoresist;
a forming step that forms a resin replica from the master substrate; and
a manufacturing step that manufactures the stamper from the replica by using an electroforming method.

17. A method for manufacturing a grooved molding substrate comprising a step that, after obtaining a stamper manufactured by the method for manufacturing a stamper for producing a grooved molding substrate according to claim 13, manufactures the grooved molding substrate by forming glass or resin with the stamper.

18. A method for manufacturing a grooved molding substrate comprising a step that, after obtaining a stamper manufactured by the method for manufacturing a stamper for producing a grooved molding substrate according to claim 15, manufactures the grooved molding substrate by forming glass or resin with the stamper.

19. A grooved molding substrate manufactured by an injection molding method by using a stamper, wherein the groove width Gw is 0.1 µm or less.

20. The grooved molding substrate according to claim 19, wherein the groove width Gw is 0.06 µm or less.

21. The grooved molding substrate according to claim 19, wherein the sloping angle of the sidewall of the groove is 85° or more.

22. The grooved molding substrate according to claim 19, wherein the ratio of the groove depth d to the groove width Gw is 0.1 or more.

23. The grooved molding substrate according to claim 19, wherein the groove is a pit or discontinuous.

24. A memory medium whose substrate is manufactured by the method for manufacturing a grooved molding substrate according to claim 17.

25. A memory medium whose substrate is manufactured by the method for manufacturing a grooved molding substrate according to claim 18.

26. A memory medium whose substrate is the grooved molding substrate according to claim 19.

27. A memory device having the memory medium according to claim 24.

28. A memory device having the memory medium according to claim 25.

29. A memory device having the memory medium according to claim 26.

30. A computer having the memory device according to claim 27.

31. A computer having the memory device according to claim 28.

32. A computer having the memory device according to claim 29.
